Europäisches Patentamt

European Patent Office

Office européen des brevets

(11) Publication number: **0 071 479**

**B1**

(12) **EUROPEAN PATENT SPECIFICATION**

(45) Date of publication of patent specification: **28.05.86**

(21) Application number: **82304011.8**

(22) Date of filing: **29.07.82**

(51) Int. Cl.⁴: **B 23 H 1/00**

(54) Wire electrical discharge machining process and apparatus.

(30) Priority: **30.07.81 US 288390**
**30.07.81 US 288391**

(43) Date of publication of application:
**09.02.83 Bulletin 83/06**

(45) Publication of the grant of the patent:
**28.05.86 Bulletin 86/22**

(84) Designated Contracting States:
**BE DE FR GB IT SE**

(56) References cited:
**US-A-3 752 950**
**US-A-4 205 213**
**US-A-4 233 486**

(73) Proprietor: **Corning Glass Works**
**Houghton Park**
**Corning New York 14831 (US)**

(72) Inventor: **Cunningham, George Meldrum**
**2463 Stonecroft Drive**
**Horseheads New York (US)**
Inventor: **Majestic, Peter John**
**R.D. No. 2, Box 432**
**Corning New York (US)**

(74) Representative: **Boon, Graham Anthony et al**
**Elkington and Fife High Holborn House**
**52/54 High Holborn**
**London, WC1V 6SH (GB)**

Courier Press, Leamington Spa, England.

## Description

Conventional wire electrical discharge machining (EDM) equipment includes a head assembly mounted on a machine tool body and a numerically controlled positioning table. The wire equipment contains a spool assembly on which a fine wire is held taut between two spoools. The drive spool moves the wire at a fixed rate from one spool to another with the usable work length between the two spools being about 100 to 200 mm. The cutting rate depends upon the wire size and the amperage carried by the wire, plus the feed rate set for the depth of the cup. Deionized water is not only normally used as the dielectric, but also functions to flush out eroded particles produced during the cutting action. As is typical with all EDM operations, the wire electrode produces a uniform overcut or overburn which may be of the order of about 0.05 to 0.075 mm over the diameter of the electrode.

In the extrusion forming of ceramic honeycomb structures used in catalytic converters for internal combustion engines, it is necessary to form extrusion dies with substantially long, thin slots which are not only straight and extend across the face of the die, but which also have parallel sidewalls, are burr-free and have consistent surface finish. In addition, such long, thin slots should have a length greater than about 90 mm, a depth in excess of about 1.5 mm, and a width not greater than 0.3 mm.

Known EDM wire processes, such as disclosed in U.S. Patents Nos. 2,526,423; 4,205,213, and 4,233,486, are all capable of producing slots. However, such processes have a limited effective depth of slot which can be cut with a given wire diameter over a length of 90 mm or more within the surface of the workpiece. That is, for example, the difficulty encountered with known EDM wire processes of flushing out the eroded particles from within small slots larger than 1.5 mm in depth during the cutting process, limits the effective depth of the cut. As the wire cutting process stalls due to a build-up of eroded particles, the slot width becomes materially enlarged or unduly "overcut" a such depth, thus producing uneven slots and wire breakage.

Most EDM wire processes utilize a longitudinal or coaxial method of flushing wherein the deionized water is applied longitudinally along or coaxially of the wire making the longitudinal cut or slot in the workpiece. However, when machining such a longitudinal slot utilizing the wire process, the coaxially applied flushing medium is deflected by the edge of the workpiece, and accordingly, the deflection of the dielectric often causes an inefficiency or breakdown in the cutting process. An inefficient machining condition is exhibited when the machine repeatedly backs away from the cutting surface and discontinues sparking, or when orange sparks are observed in the cutting area, or when persistent wire breakage occurs. As previously mentioned, such inefficient machining conditions not only seriously affect the ability to machine a slot to a given desired depth, but also "repeatability", which is the ability to consistently form identical slots, is virtually lost. Further, it has been found that a widening or bellmouth condition often occurs at the entrance of the slot adjacent the work surface when cutting with conventional EDM wire processes.

An object of the present invention is to overcome or alleviate the problems encountered with known EDM wire processes and apparatus and permit the repeatable formation of a plurality of long, thin slots having parallel sidewalls with consistent surface finish and a depth in excess of 1.5 mm and preferably over 15 mm and a length of 90 mm or greater.

An embodiment of the present invention relates to the utilization of a longitudinal path within which the EDM wire travels along the length of the cutting surface of the workpiece. Although open at each end, the path is substantially closed along its extent so as to direct the flow of dielectric fluid along the longitudinal path about the EDM wire over the extent of the cutting surface of the workpiece. The enclosed longitudinal path may be formed by a flushing device or trough having a longitudinal channel formed therein positioned against the cutting surface of the workpiece.

A further embodiment of the present invention relates to the utilization of an oversized pre-cut or counter slot formed in the surface of a workpiece so as to facilitate the formation of long thin slots within such workpiece by an EDM wire process. The utilization of the enlarged pre-cut or pilot counter slot in the surface of the workpiece funcitons to not only virtually double the depth of cut obtainable with an EDM wire process, but also increases the efficiency of the cutting process. The counter slot permits coaxial flushing in such a manner to effectively flush the eroded particles from within the slot being cut.

In the accompanying drawings:

Fig. 1 is a side elevational view of a flushing device or trough of the present invention positioned against the cutting surface of a workpiece;

Fig. 2 is a top plan view of the device shown in Fig. 1.

Fig. 3 is a front elevational view rotated 90° of the device shown in Fig. 1, but with the workpieces removed;

Figs. 4, 5 and 6 are schematic top plan views of various channel configurations which may be utilized in the trough member shown in Fig. 1;

Fig. 7 is a greatly enlarged fragmental sectonal view of a workpiece showing the slot formed in accordance with a further embodiment of this invention;

Fig. 8 is an oblique view of an extrusion die, with a fragmental portion thereof showing a pattern of discharge slots formed in the face thereof; and

Fig. 9 is a greatly enlarged fragmental oblique view of a section of the die shown in Fig. 8, illustrating the slots formed therein utilizing the EDM wire process of the present invention.

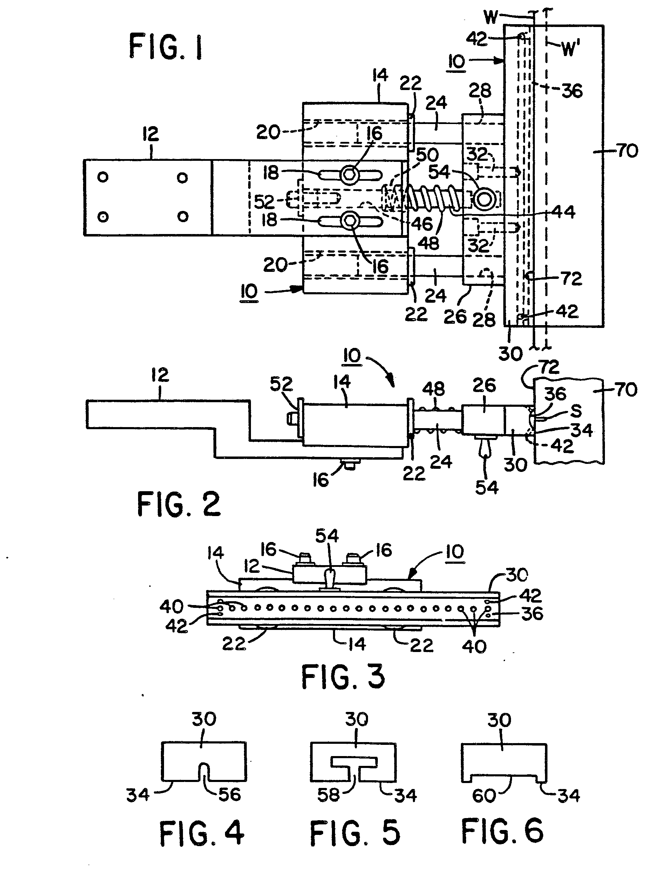

Referring now to the drawings, and particularly Figs. 1, 2 and 3, a flushing device or trough assembly 10 for a wire EDM operation is shown positioned adjacent a cutting surface 72 of a workpiece 70. The trough assembly 10 includes a mounting bracket 12 for mounting the assembly on a supporting structure (not shown) of a wire EDM machine. A guide block 14 is adjustably mounted upon the mounting bracket by means of a cap screws 16 projecting through slots 18 formed in the mounting bracket 12. The guide block has a pair of outwardly positioned upper and lower bores 20 provided with flanged bearing members 22 for slidably receiving guide pins 24. The guide pins 24 are secured to a plunger block 26 within recesses 28. The plunger block 26 is bolted to a trough member or containment block 30, for example by screws or bolts 32.

The forward face 34 of the trough 30 is provided with a recess or channel 36 along its longitudinal extent which is open to forward face 34 and at the longitudinal top and bottom ends of the trough member 30 which are adjacent terminating edges of the cutting surface 72. If desired, a passageway 38 may be formed within the trough 30 and provided with a plurality of openings 40 which communicate with the channel 36 to provide transverse flushing of the wire cutting area. In addition, a plurality of vents or drain passages 42 may be provided within the trough or containment block 30 which communicates between the channel 36 and an outer surface of the block so as to facilitate the draining or venting of excess flushing fluid from the channel.

A wire W such as utilized with a standard wire EDM apparatus is shown as a solid line in Fig. 1 at its initial position adjacent the cutting surface 72 of the workpiece 70, and is shown as a broken line W' in a cutting position such as for forming slot S shown in Fig. 2. It will be noted that a longitudinal path is formed about the wire by the channel 36 and the slot S so as to direct the axial flow of dielectric flushing fluid along the longitudinal length of the wire and thereby remove and flush out eroded particles from within the small slots machined by the wire.

The forward face 34 of the trough 30 of the trough 30 is retained against the cutting surface 72 of the workpiece 70 to contain the dielectric fluid in a longitudinal or axial path around the wire during the cutting cycle. A guide pin 44 is secured to the plunger block 26 and projects within a bore 46 formed within the guide block 14, and a spring 48 which is seated at the end of a counterbore 50 within guide block 14 is positioned about guide pin 44 and abuts a rear surface of the plunger block 26 to urge the trough or containment block 30 outwardly into operable engagement with the cutting surface 72 of the workpiece 70. A stop washer assembly 52 is secured to the rearward end of the guide pin 44 to limit the forward movement of the plunger block 26 with respect to guide block 14. A finger control handle 54 extends outwardly from the plunger block 26 for manually sliding the grough 30 away from and toward the workpiece 70. Although the channel 36 is shown in Fig. 2 as having an arcuate configuration, the channel or trough 30 may have a counterbore configuration 56 as shown in Fig. 4, a T-shaped configuration 58 as shown in Fig. 5, or a rectangular configuration 60 as shown in Fig. 6.

The longitudinal path formed by the channel and the slot around the wire aids in flushing unwanted particles from the cutting area so as to facilitate the provision of long, thin slots having parallel sidewalls with consistent surface finish. As a specific rectangular channel 60 formed in trough 30 may have a channel depth of about 1.3 mm and a width of about 13 mm. The length of the channel, independently of its configuration, is substantially equivalent to the length of the cutting surface in which the-cut is being machined. Without utilizing the trough of the present invention, process interruptions when machining with molybdenum wire could be anticipated to occur anywhere between about 0.25 mm penetration and 1.5 mm penetration, with the maximum penetration seldom exceeding 1.5 mm. When utilzing the T-shaped channel as shown in Fig. 5, a mean penetration of 0.3 mm could be realised when utilizing a 0.1 mm diameter molybdenum wire while a mean depth of about 3 mm could be realised when utilizing the counterbore channel configuration as shown in Fig. 4.

With the application of the trough of the present invention, quality slots may be formed in a die face having 171 and 203 mm cutting surfaces, by utilizing 0.18 mm and 0.20 mm diameter brass wires and the curved channel of Fig. 2 or the rectangular channel of Fig. 6 having a depth of about 1.3 mm and a width of about 13 mm. The standard deviation of the slot size ranges between about 0.05 mm and 0.15 mm, depending upon the material utilized and the quality of the workpiece. These results demonstrate that the use of the troughs of the present invention enables the workpiece to be machined significantly deeper and with consistent parallel surface finish than that which is obtainable without the utilization of the present invention.

The use of side flushing, such as though openings 40, in conjunction with the axial flushing may be utilized if desired, particularly with fine molybdenum wire applications. A significant increase in penetration may be realised utilizing this technique, although it may not prove to be necessary with all wire applications.

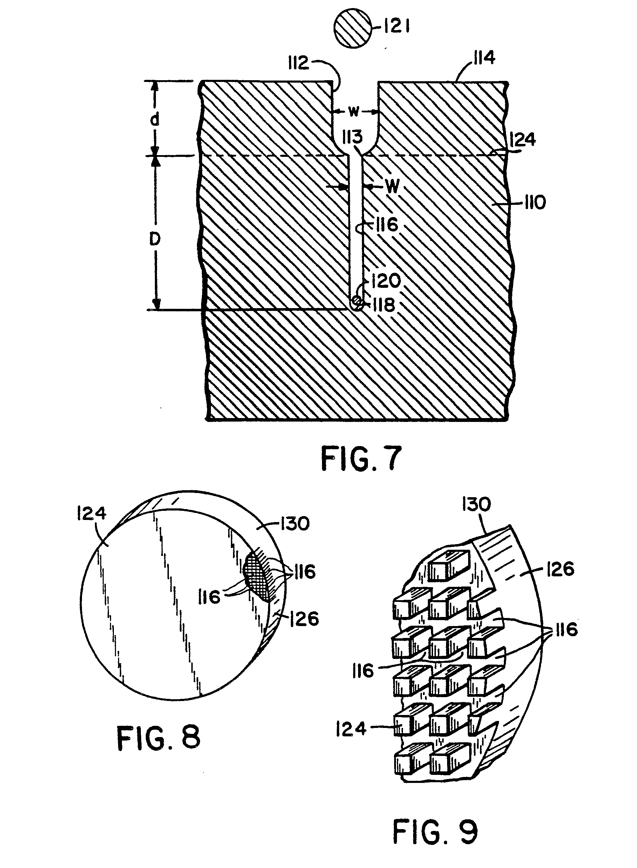

Referring now to Figures 7 to 9 of the drawings, a fragmental portion of a workpiece 110 is shown having an enlarged pre-cut or pilot counter slot 112 formed in a work surface 114 by EDM wire 121 and extending to a depth $d$. A long, thin slot 116 which has parallel sides of consistent surface finish extends into the workpiece 110 from an inner end 113 of the counter slot 112 a depth D. A wire 120 of an EDM wire machine is shown adjacent the inner end 118 of the slot 116. As noted in Fig. 7, the diameter of wire 121 and the width $w$ of the counter slot 112 are substantially larger than the diameter of wire 120 and the width W of the long, thin slot 116, and the width $w$ may be of the order of 2 to 3 times the width W of the long, thin slot. After the desired slots 116 are formed within the workpiece 110, the counter slots 112 may be eliminated by machining off the upper surface 114 of the workpiece 110 down to the bottom 113 of the counter slots 112 to form a new functional surface 124, that is, the depth $d$ is removed.

When the workpiece 110 is to be made into an extrusion die 130, as shown in Fig. 8, the new surface 124 becomes the functional discharge or outlet surface 124 of the extrusion die, and the plurality of long, thin slots 116 form a gridwork of such slots across the discharge face 124 of the die 130. As noted, the slots 116 extend into the side edge 126 of the die a distance equal to the depth D shown in Fig. 7.

Although only a fragmental portion 124 of the surface of die 130 is shown in Fig. 9, it will be apparent that the slots 116 extend across the full face 124 of the die 130 in a criss-cross fashion, and at the widest point extend across the full diameter of the die, which may be about 200 mm or more.

The basic EDM wire process is capable of machining slots with a width of about 0.25 mm and above, whereas the present invention enables the accurate and repeatable machining of long, thin, highly accurate slots having a width of less than 0.18 mm, and a depth greater than 2.5 mm. An enlarged pre-cut or pilot counter slot is initially formed in the surface of the workpiece with a width of about 1.5 to 3.5 times the desired slot widths to be formed in the workpiece. The depth of the counter slot may vary from about 1.3 mm to about 3.8 mm with an effective mean depth of about 2.16 mm. In view of the time and cost element involved in forming an enlarged counter slot and the fact that deeper depths do not appear to produce increased cutting efficiencies in the desired slot, there appears to be no reason to provide a counter slot having a maximum depth greater than about 3.8 mm.

When the depth of the counter slot is less than about 0.76 mm, the standard deviation within the desired slot increases materially thus providing undesirable non-uniformity in parallelism and straightness of the cut slot. For example, with a counter bore having a depth of about 3.8 mm, it was found that the workpiece could be effectively penetrated to a mean depth of about 3.28 mm with a standard deviation of 0.0455 mm, whereas in a similar test with a 0.76 mm depth counter bore, it was found that a mean depth of about 3.15 mm could be obtained with a standard deviation of only 0.13 mm. Further, when utlizing a counter bore of only 0.76 mm, the average cutting speed falls off significantly during the final 0.46 mm of penetration.

Although as previously mentioned, uncontrolled and irregular overcut is undesirable, such as occurs when the cutting becomes stalled due to ineffective flushng or removal of particles from the slot, it will be understood, however, that a uniform overcut is obtained during normal operation. That is, in a preferred embodiment, a 0.25 mm diameter brass wire is utilized to machine a pilot or counter slot 112 within the face 114, producing a mean width $w$ of about 0.30 mm. The pilot slot 112 is machined to a depth $d$ of about 2.16 mm, and a long, thin working slot 116 is then machined with a 0.13 mm diameter molybdenum wire repeatedly producing straight, burr-free slots 116 with a mean width of about 0.15 mm and a standard deviation of about 0.0046 mm. The maximum length of the slot machined in the workpiece is equivalent to the maximum diameter of the extrusion die 130 to be formed therefrom and may be 171 mm to 203 mm, depending on the desired die. Various materials which may be machined by such process are EZ—Cut 20, cold-rolled steel, D—2 steel, crucible CPM—10V, Ferr-o-tic, stainless and high nickel alloys. However, the process is applicable to virtually all tool steels, carbide materials, hot ISO steels and vacuum melted steels.

Although the exact mechanism which allows the counter slot of the present invention to produce improved cutting efficiencies and improved standard deviations compared to known techniques has not been precisely determined, it is believed that the counter slot or enlarged pre-cut 112 functions as a turbulent flushing chamber for the dielectric fluid supplied to the cutting area during the EDM process, so as to facilitate the easy removal from the slot 116 by such fluid of the eroded particles within the slot produced during the cutting, which limit the effective depth and rate of the cut if not so removed. The coaxial flushing is captured by the counter slot, thus enhancing effective flushing of eroded particles. Upon completion of the formation of the long, thin slots 116 forming the discharge slots of the die 130, the face 114 is machined away, removing the large counter slots 112 down to the functional die face 124.

Although the now preferred embodiments of the invention have been disclosed, it will be understood by those skilled in the art that the wire cutting process of the present invention may be utilized to form virtually any article desired, and that various changes and modifications may be made within the scope of the invention.

## Claims

1. A method of forming a slot in a workpiece utilizing a wire cutting electrical discharge machining process, which comprises providing a workpiece (70, 110) having a cutting surface (72), positioning an electrical discharge machining wire (W) adjacent a desired length of said cutting surface, providing a substantially enclosed longitudinal path about said cutting wire (W) along the extent of said cutting surface (72) with said path being open at end portions adjacent terminating edges of said cutting surface, applying fluid to said path and directing such fluid along said substantially enclosed longitudinal path about said cutting wire, and flushing out eroded particles formed during the cutting of a slot in the surface of the workpiece.

2. A method as claimed in claim 1, including the step of applying dielectric fluid axially of said longitudinal path.

3. A method as claimed in claim 1, including the step of applying a dielectric fluid to said longitudinal path transversely of said path.

4. A method as claimed in any preceding claim, including the step of providing means (42) for draining said fluid applied to said longitudinal path transversely of said path intermediate its open ends.

5. A method as claimed in any preceding claim, including the steps of positioning a trough member (30) having a channel (36) formed in a forward surface (34) in operable engagement with the cutting surface (72) of said workpiece (70, 110) such that said electrical discharge machining wire (W) is positioned within the channel (36) formed in said trough member (30) whereby said channel (36) and through member (30) provide the substantially enclosed longitudinal path about said cutting wire along the extent of the cutting surface of said workpiece.

6. A method of forming a slot in a workpiece utilizing a wire cutting electrical discharge machining process, which comprises initially cutting by wire electrical discharge machining a counter slot (112) in the surface (72) of a workpiece (70, 110) having a width at least 1.5 times the width of a desired slot (116) to be formed in the said workpiece, machining said counter slot (112) to a depth greater than about 0.76 mm, wire electrical discharge machining a desired slot in said workpiece beginning at the bottom of said counter slot utilizing dielectric fluid, and utilizing said counter slot to facilitate the flushing out with said fluid of eroded particles from within said desired slot (116) produced during the electrical discharge machining of the same so as to improve the obtainable cutting rate and depth of such slot.

7. A method as claimed in claim 6, including the steps of initially cutting said counter slot in the surface of said workpiece with a first wire, electrical discharge machining the desired slot in said workpiece with a second wire, and selecting said first wire with a diameter of at least about twice the diameter of said second wire.

8. A method as claimed in claim 6 or 7, including the step of machining said counter slot in the surface of said workpiece with a width of between about 1.5 and 3.5 times the width of the desired slot machined within said workpiece.

9. A method as claimed in any one of claims 6 to 8, including the step of wire electrical discharge machining said desired slot with a length greater than 90 mm and a depth of greater than 2.5 mm.

10. A method as claimed in any one of claims 6 to 9, wherein the wire electrical discharge machining of said desired slot in said workpiece has a width less than 0.18 mm.

11. A method of forming a slot in a workpiece as claimed in any one of claims 6 to 10, wherein said surface of said workpiece is removed down to the bottom of said counter slot so as to form a new surface at the beginning of said desired slot.

12. Apparatus for use with wire cutting electrical discharge machining equipment wherein a slot (116) is formed in a cutting surface (72) of a workpiece (70, 110), which comprises a longitudinally extending trough member (30) having a forward surface (34), a channel (36) formed within said trough member longitudinally along said forward surface, said channel (36) being open to said forward surface (34) and at each longitudinal extent of said trough member (30), means (14) for positioning the forward surface of said trough member (30) in operable engagement with the cutting surface (72) of said workpiece so that the channel (36) formed in the trough member and the cutting surface provide a substantially enclosed longitudinal path along the extent of the cutting surface within which the cutting wire (W) of the electrical discharge machining equipment passes, and said longitudinal path providing means for directing and confining the flow of dielectric fluid supplied thereto axially along the cutting wire so as to flush out and remove eroded particles formed during the cutting of a slot in the surface of the workpiece.

13. Apparatus as claimed in claim 12, wherein said trough member (30) includes means (40) for supplying fluid to said channel transversely of said channel.

14. Apparatus as claimed in claim 12 or 13, wherein said trough member includes means (42) for draining excess fluid from said channel externally of said trough member.

15. Apparatus as claimed in claim 12, 13 or 14, wherein said channel (36) formed within said torugh member (30) has a rectangular cross-sectional configuration.

16. Apparatus as claimed in claim 12, 13 or 14 wherein said channel (36) formed within said trough member (30) has an arcuate cross-sectonal configuration.

**Patentansprüche**

1. Verfahren zur Herstellung eines Schlitzes in einem Werkstück unter Verwendung eines Funkenerosionsbearbeitungsverfahrens mit Drahtschneidung, bestehend aus dem Vorsehen eines Werkstücks (70, 110) mit einer Schneidoberfläche (72), dem Positionieren eines Funkenerosionsbearbeitungsdrahtes (W) angrenzend an eine gewünschte Länge der Schneidoderfläche, Vorsehen einer im wesentlichen umschlossenen Längsbahn um den Schneidedraht (W) längs der Ausdehnung der Schneidoberfläche (72), wobei die Bahn an Endabschnitten offen ist, welche an Abschlußränder der Schneioberfläche angrenzen, dem Aufbringen von Fluid auf die Bahn und dem Leiten dioeses Fluidslängs der im wesentlichen umschlossenen Längsbahn um den Schneiddraht, und aus dem Ausspülen erodierter Teilchen aus einem Schlitz in der Oberfläche des Werkstücks, die während des Schneidens gebildet werden.

2. Verfahren nach Anspruch 1, dadurch gekennzeichnet, daß ein dielektrisches Fluid in axialer Richtung der Längsbahn aufgegeben wird.

3. Verfahren nach Anspruch 1, dadurch gekennzeichnet, daß ein dielektrisches Fluid auf die Längsbahn quer zu dieser bahn aufgegeben wird.

4. Verfahren nach einem vorangehenden Anspruch, gekennzeichnet durch Vorsehen einer Einrichtung (42) für das Drainieren des der Längsbahn zugeführten Fluids quer zu der Bahn zwischen deren offenen Enden.

5. Verfahren nach einem vorangehenden Anspruch, gekennzeichnet durch das Positionieren eines Muldenelements (30) mit einem in einer vorderseitigen Oberfläche (34) gebildeten Kanal (36) in einem betriebsfähigen Angriff an die Schneidoberfläche (72) des Werkstücks (70, 110) in der Weise, daß der Funkenerosionsbearbeitungsdraht (W) innerhalb des in dem Muldenelement (30) gebildeten Kanal (36) angeordnet wird, wodurch der Kanal (36) und das Muldenelement (30) die im wesentlichen umschlossene Längsbahn um den Schneidedraht längs der Ausdehnung der Schneidoberfläche des Werkstücks bilden.

6. Verfahren zur Herstellung eines Schlitzes in einem Werkstück unter Verwendung eines Funkenerosionsbearbeitungsverfahrens mit Drahtschnbeidung, bei dem zunächst durch Funkenerosionsbearbeitung mit einem Draht einen Senkungsschlitz (112) in die Oberfläche (72) eines Werkstücks (70, 110) geschnitten wird, der wenigstens die 1,5 fache Breite des gewünschten Schlitzes (116) besitzt, der in dem Werkstück gebildet werden soll, bei dem der Senkungsschlitz (112) auf eine Tiefe von mehr als 0,76 mm bearbeitet wird, bei dem ein gewünschter Schlitz in dem Werkstück mit einem Drahtfunken erodiert wird, wobei an dem Boden des Senkungsschlitzes unter Verwendung eines dielektrischen Fluids begonnen wird, und bei dem der Senkungsschlitz zur Erleichterung des Ausspülens erodierter Partikel mit dem Fluid aus dem Inneren des gewünschten Schlitzes (116), der während der Funkenerosionsbearbeitung desselben erzeugt wird, so verwendet wird, daß die erzielbare Schnittgeschwindigkeit und Schnittiefe dieses schlitzes verbessert wird.

7. Verfahren nach Anspruch 6, dadurch gekennzeichnet, daß zunächst der Senkungsschlitz in die Oberfläche des Werkstücks mit einem ersten Draht geschnitten wird, daß der gewünschte Schlitz in dem Werkstück mit einem zweiten Draht funkenerodiert wird, und daß de erste Draht mit einem Durchmesser von wenigstens etwa dem zweifachen Durchmesser des zweiten Drahtes ausgewählt wird.

8. Verfahren nach Anspruch 6 oder 7, dadurch gekennzeichnet, daß der Senkungsschlitz in der Oberfläche des Werkstücks mit einer Breite zwischen etwa dem 1,5- und 3,5 fachen der Breite des in das Werkstück bearbeiteten gewünschten Schlitzes eingearbeitet wird.

9. Verfahren nach einem der Ansprüche 6 bis 8, dadurch gekennzeichnet, daß der gewünschte Schlitz mit einer Länge von mehr als 90 mm und einer Tiefe von mehr als 2,5 mm mit einem Draht funkenerosionsbearbeit wird.

10. Verfahren nach einem der Ansprüche 6 bis 9, dadurch gekennzeichnet, daß die Draht-Funkenerosionsbearbeitung des gewünschten Schlitzes in dem Werkstücke eine Breite von weniger als 0,18 mm besitzt.

11. Verfahren zur Herstellung eines Schlitzes in einem Werkstück nach einem der Ansprüche 6 bis 10, dadurch gekennzeichnet, daß die Oberfläche des Werkstücks zu dem Boden des Senkungsschlitzes derart abgetragen wird, daß eine neue Oberfläche am Anfang des gewünschten Schlitzes gebildet wird.

12. Vorrichtung zur Verwendung bei einer Funkenerosionsbearbeitungseinrichtung mit Drahtschneidung, wobei ein Schlitz (116) in einer Schneidoberfläche (72) eines Werkstücks (70, 110) gebildet wird, gekennzeichnet durch ein sich in Längsrichtung erstrekendes Muldenelement (30) mit einer vorderseitigen Oberfläche (34), einen Kanal (36), der innerhalb des Muldenelements in Längsrichtung längs der vorderseitigen Oberfläche gebildet ist, wobei der Kanal (36) zu der vorderseitigen Oberfläche (34) und an jeder Längsausdehnung des Muldenelements (30) offenliegt, wine Einrichtung (14) zur Positionierung der vorderseitigen Oberfläche des Muldenelements (30) in betriebsfähiger Anlage an die Schneidoberfläche (72) des Werkstücks in der Weise, daß der in dem Muldenelement gebildete Kanal (36) und die Schneidoberfläche eine im wesentlichen umschlossene Langsbahn entlang der Ausdehnung der Schneidoberfläche vorsehen, innerhalb der der Schneidedraht (W) Funkenerosionsbearbeitungseinrichtung entlant läuft, und wobei die Längsbahn eine Einrichtung zum Leiten und Begrenzen der Strömung des dielektrischen Fluids aufweist, das dieser axial längs dem Schneidedraht so zugeführt wird, daß es erodierte Partikel ausspült und entfernt, die während des Schneidens eines Schlitzes in der Oberfläche des Werkstücks gebildet werden.

13. Vorrichtung nach Anspruch 12, dadurch gekennzeichnet, daß zu dem Muldenelement (30) eine Einrichtung (40) für das Zuführen von Fluid zu dem Kanal quer zu dem Kanal gehört.

14. Vorrichtung nach Anspruch 12 oder 13, dadurch gekennzeichnet, daß zu dem Muldenelement eine Einrichtung (42) für das Drainieren überflüssigen Fluids aud dem Kanal zur Außenseite des Muldenelements gehört.

15. Vorrichtung nach Anspruch 12, 13 oder 14, dadurch gekennzeichnet, daß der innerhalb des Muldenelements (30) gebildete Kanal (36) eine rechtwinklige Querschnittsausbildung besitzt.

16. Vorrichtung nach Anspruch 12, 13 oder 14, dadurch gekennzeichnet, daß der in dem Muldenelement (30) gebildete Kanal (36) eine bogenförmige Querschnittsausbildung besitzt.

## Revendications

1. Procédé pour former une fente dans une pièce en utilisant un procédé d'usinage par étincelage électrique à fil, suivant lequel: on prévoit une pièce (70, 110) ayant une surface de coupe (72), on dispose un fil métallique (W) d'usinage par étincelage électrique au voisinage d'une longueur désirée de ladite surface de coupe, on prévoit un passage longitudinal à peu près fermé autour dudit fil métallique (W) de coupe suivant l'étendue de ladite surface de coupe (72), ledit passage étant ouvert à ses extrémités au voisinage des bords d'extrémité de ladite surface de coupe, on envoie un fluide dans ledit passage, on dirige ce fluide le long dudit passage longitudinal à peu près fermé autour dudit fil métallique de coupe, et on chasse par rinçage les particules provenant de l'érosion et formées lors de la coupe d'une fente dans la surface de la pièce.

2. Procédé suivant la revendication 1, comprenant la phase consistant à envoyer un fluide diélectrique axialement audit passage longitudinal.

3. Procédé suivant la revendication 1, comprenant la phase consistant à envoyer un fluide diélectrique dans ledit passage longitudinal transversalement audit passage.

4. Procédé suivant l'une quelconque des revendications précédentes, comprenant la phase consistant à prévoir des moyens (42) pour vidanger ledit fluide envoyé dans ledit passage longitudinal transversalement audit trajet en des points situés entre ses extrémités ouvertes.

5. Procédé suivant l'une quelconque des revendications précédentes, cumprenant les phases consistant à positionner un élément (30) en auge ayant un canal (36) formé dans une surface avant (34) en contact de travail avec la surface de coupe (72) de ladite pièce (70, 110) de manière que ledit fil métallique (W) d'usinage par étincelage soit positionné à l'intérieur du canal (35) formé dans ledit élément (30) en auge, grâce à quoi ledit canal (36) et ledit élément (30) en auge définissent ledit passage longitudinal à peu près fermé autour dudit fil métallique de coupe suivant l'étendue de la surface de coupe de ladite pièce.

6. Procédé pour former une fente dans une pièce en utilisant un procédé d'usinage par étincelage électrique au fil, suivant lequel ou coupe initialement par usinage par étincelage au fil, dans la surface (72) d'une pièce (70, 110), une contre-fente (112) ayant une largeur d'au moins 1,5 fois la largeur d'une fente désirée (116) à former dans ladite pièce, on usine ladite contre-fente (112) jusqu'à une profondeur supérieure à environ 0,76 mm, on forme par usinage par étincelage au fil la fente désirée dans ladite pièce en començant à la partie inférieure de ladite contre-fente en utilisant un fluide diélectrique et en utilisant ladite contre-fente pour faciliter l'enlèvement de ladite fente désirée (116), des particules provenant de l'érosion et produite pendant l'usinage par étincelage de cette fente, par rinçage avec ledit fluide, de façon à améliorer la vitesse de coupe et la profondeur de la fente qu'on peut obtenir.

7. Procédé suivant la revendication 6, comprenant les phases consistant à tailler initialement ladite contrefente dans la surface de ladite pièce avec un premier fil de métal, à usiner par étincelage la fente désirée dans ladite pièce avec un second fil métallique, et à choisir ledit premier fil de métal avec un diamètre d'au moins environ deux fois le diamètre dudit second fil de métal.

8. Procédé suivant l'une ou l'autre des revendications 6 ou 7, comprenant la phase consistant à usiner ladite contre-fente dans la surface de ladite pièce avec une largeur d'environ 1,5 à 3,5 fois la argeur de la fente désirée usinée dans ladite pièce.

9. Procédé suivant l'une quelconque des revendications 6 à 8, comprenant la phase consistant à usiner par étincelage au fil ladite fente désirée avec une longueur supérieure à 90 mm et une profondeur supérieure à 2,5 mm.

10. Procédé suivant l'une quelconque des revendications 6 à 9, dans lequel l'usinage par étincelage au fil de ladite fente désirée das ladite pièce présente une largeur inférieure à 0,18 mm.

11. Procédé pour former une fente dans une pièce suivant l'une quelconque des revendications 6 à 10, dans lequel ladite surface de ladite pièce est enlevée jusqu'au fond de ladite contrefente de façon à former une nouvelle surface au commencement de ladite fente désirée.

12. Appareil destiné à être utilisé avec un appareil d'usinage par étincelage au fil dans lequel une fente (116) est formée dans une surface de coupe (72) d'une pièce (70, 110), qui comprend un élément en auge s'étendant longitudinalement ayant une surface avant (34), un canal (36) formé dans ledit élément en auge, longitudinalement suivant ladite surface avant, ledit canal (36) étant ouvert sur ladite surface avant (34), et à chaque étendue longitudinale dudit élément (30) en auge, des moyens (14) pour positionner la surface avant dudit élément (30) en auge en contact de travail avec la surface de coupe (72) de ladite pièce de façon que le canal (36) formé dans l'élément en auge et la surface de coupe délimitent un passage longitudinal à peu près fermé suivant l'étendue de la surface de coupe, dans lequel passe le fil métallique de coupe (W) de l'appareil d'usinage par étincelage, ledit passage longitudinal constituant un moyen pour diriger et confiner l'écoulement d'un fluide diélectrique qui y est envoyé axialement suivant le fil de coupe afin de chasser par rinçage et enlever les particules provenant de l'érosion et formées pendant la coupe d'une fente dans la surface de la pièce.

13. Appareil suivant la revendication 12, dans lequel ledit élément (30) en auge comprend des moyens (40) pour envoyer un fluide dans ledit canal transversalement à ce dernier.

14. Appareil suivant la revendication 12 ou 13, dans lequel ledit élément en auge comprend des moyens (42) pour évacuer à l'extérieur dudit élément en auge le fluide en excès provenant dudit canal.

15. Appareil suivant la revendication 12, 13 ou 14, dans lequel ledit canal (36) formé à l'intérieur dudit élément (30) en auge présente en section transversale une configuration rectangulaire.

16. Appareil suivant la revendication 12, 13 ou 14, dans lequel ledit canal (36) formé dans ledit élément (30) en auge présente en section transversale une configuration incurvée.

# FIG. I

# FIG. 2

# FIG. 3

# FIG. 4

# FIG. 5

# FIG. 6

FIG. 7

FIG. 8

FIG. 9